# EUROPEAN PATENT APPLICATION

(11) **EP 2 902 431 A1**
(43) Date of publication of application: **05.08.2015**
(21) Application number: 14000404.5
(22) Date of filing: 04.02.2014
(51) Int. Cl.: C08G 75/00, B01J 41/12, B01J 43/00, B01D 61/00, B01D 71/68, B05D 3/00, C07D 235/18, C08F 8/30, C08G 61/00, C08G 73/00, C08L 71/00, H01M 8/00

(54) **Polymer blends with high ion-exchange capacity and high ion-conductivity as well as methods for preparing the same**

(71) Applicant: Max-Planck-Gesellschaft zur Förderung der Wissenschaften e.V., 80539 München (DE)
(72) Inventor: Kreuer, Klaus-Dieter, 71034 Böblingen (DE); Takamuku, Shogo, Tokyo 164-0003 (JP); Titvinidze, Giorgi, 55118 Mainz (DE)
(74) Representative: Katzameyer, Michael

(57) **Abstract**

The invention relates to a polymer blend having an ion conductivity of at least 10⁻³ S/cm at room temperature (24°C) in water and comprising
a) a polymer which is a sulfonated poly(arylene sulfone) comprising or consisting of one or more repeating units of the formula -[-SO₂-Ar(SO₃M)ₒ-]ₙ, wherein n is an integer from 10 to 10.000, Ar represents an aromatic or heteroaromatic ring system with 5-18 ring atoms, M represents a cation, in particular a proton, o means an integer from 0 to 4, and wherein Ar, M and o can be identical or different in various repeating units, independently of each other, and
b) a polymer which is not a sulfonated poly(arylene sulfone) as defined for polymer a) above, preferably a basic polymer, which is chemically compatible with polymer a) in that polymer a) and polymer b) may be present in the same solvent or solvent mixture without any significant precipitation for a time period of at least 1 hour.

More specifically, the polymer blend according to the invention further exhibits one or more of the following properties:
i) at least 1.8 meq./g SO₃M groups remain exchangeable under neutral conditions;
ii) the majority or all of the SO₃M groups remain exchangeable under neutral conditions;
iii) the characteristic ionomer peak of polymer a) as observed in small angle diffraction measurements is still discernible in the small angle diffraction pattern of the polymer blend.

## Description

### Background of the Invention

Polymer electrolyte membranes (PEMs) are key components of fuel cells which are regarded as environmentally friendly and efficient electrochemical energy conversion devices.

The state-of-the-art PEMs are perfluorosulfonic acid (PFSA) ionomers such as Nafion^{®}. However, PFSAs have severe drawbacks, such as high cost, limited operating temperature (below 90°C) and stability, and severe fuel (e.g., methanol, hydrogen, oxygen) crossover. To overcome these drawbacks, in recent years a number of alternative membranes have been developed, among which are sulfonated aromatic polymers as most promising candidates due to their commercial availability and processability (Hickner et al., Chem Rev. 104 (2004), 4587). Since statistically sulfonated polymers showed insufficient conductivity and low mechanical stability at low relative humidity (RH), a major research interest focused on hydrophilic-hydrophobic multiblock copolymers. These are principally able to self-organize into phase-separated nanostructures which allow for high ion-conductivity in the hydrophilic domains and optimal membrane properties based on the hydrophobic domains. Multiblock copolymers with very favourable characteristics have been disclosed, i.a., in EP 11 004590.3. However, the preparation of these block copolymers typically involves a specific sequence of several synthesis steps which add to the production costs and are inherently difficult to control.

Another approach for preparing PEMs involves the use of polymer blends. For example, Kerres et al. (DE 100 19 732 A1; J. New. Mat. Electrochem. Systems 6, 223-230 (2003)) describe the preparation and characterisation of non-fluorinated ionically-crosslinked acid-base blend membranes. Manthiram et al. (US 2008/0020256 A1) also disclose proton-conducting acid-base polymer membranes which comprise an acidic polymer including an acidic group attached to an aromatic polymer and a basic polymer including at least one heterocyclic ring structure attached to an aromatic polymer.

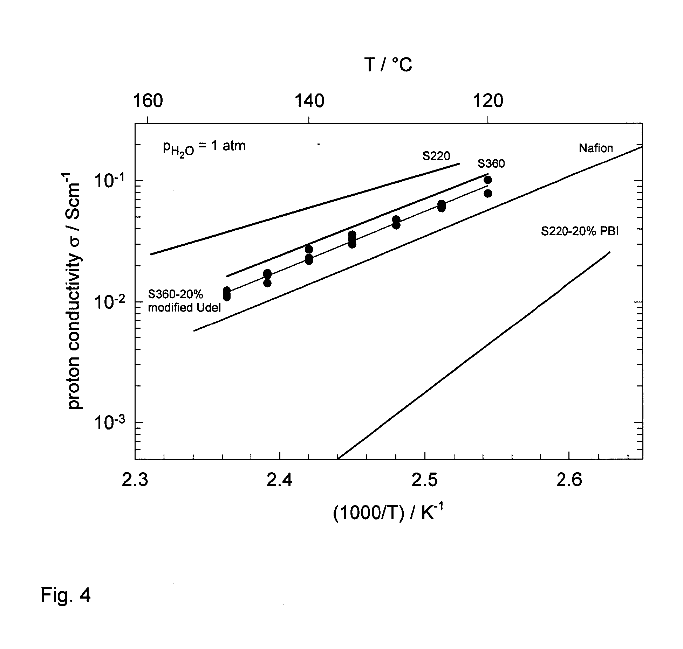

These known polymer blends, however, do not achieve ion exchange capacities of more than 1.8 meq./g., and they show a severe decrease of ion conductivity with decreasing degree of hydration (relative humidity RH) (as evident from the plot for S220-20% PBI in Fig. 4).

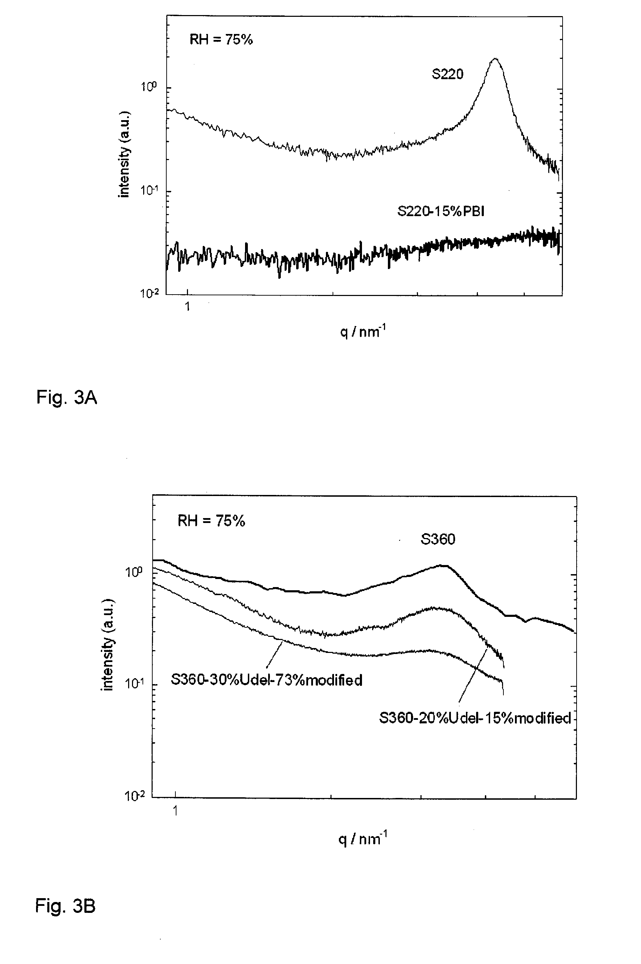

In these polymer blends, the interaction between the basic groups of one component (e.g. imidazole, benzimidazole in high concentration) and the acidic group of the other component (e.g. sulfonic acid group) leads to the formation of strong ionic cross-links. Therefore, blending (mixing) is only possible if at least one of the components is neutralized. After, e.g., re-acidifying the cast membrane, mentioned cross-linking occurs. As a consequence, some of the acidic groups are excluded from ion exchange reactions, i.e. the ion exchange capacity IEC of the blend membrane is lower than expected from the concentration of acidic groups. Another consequence of the interaction is the decay of nano-morphological features which are characteristic for the pure acidic component when hydrated (see Fig. 3A).

In view of this prior art, the object of the present invention is to provide improved polymer blends with a very high ion-exchange capacity, high ion-conductivity also at low RH as well as high stability that may be used advantageously, particularly for membrane and fuel cell technologies, and can be produced in a cost-effective manner. One particular related object is providing a new method for producing such polymer blends.

These objects are achieved according to the invention by providing the polymer blends according to claim 1 and membrane according to claim 15 as well as the method for producing these polymer blends according to claim 17. The subject of further claims are more specific embodiments and other aspects of the invention.

### Description of the Invention

The present invention provides a polymer blend having an ion conductivity of at least 10⁻³ S/cm at room temperature (24°C) in water (and typically in other protic solvents as well) by controlling the interaction between the blend components such that an acidic and non-acidic, in particular a basic, component can be intimately mixed, without changing the characteristic chemical and nano-morphological properties of the acidic component to an extend observed for state of the art blend membranes.

This is accomplished by a polymer blend comprising
a) an acidic polymer which is a sulfonated poly(arylene sulfone) comprising or consisting of one or more repeating units of the formula -[-SO₂-Ar(SO₃M)ₒ-]ₙ, wherein n is an integer from 10 to 10.000, Ar represents an aromatic or heteroaromatic ring system with 5-18 ring atoms, M represents a cation, in particular a proton, o means an integer from 0 to 4, and wherein Ar, M and o can be identical or different in various repeating units, independently of each other, and
b) a polymer which is not a sulfonated poly(arylene sulfone) as defined for polymer a) above, preferably a non-acidic polymer, more preferred a basic polymer, and which is chemically compatible with polymer a) in that non-neutralized polymers a) and b) may be present in the same solvent or solvent mixture without any significant precipitation for a time period of at least 1 hour.

More specifically, the polymer blend is characterized by one or more, preferably by all, of the following properties:
i) the blend formed from both polymers has an IEC of at least 1.8 meq/g;
ii) the majority, preferably at least 90%, more preferably at least 95% or 99%, of sulfonic acid groups of polymer a) remains titratable after blending (e.g. virtually all protons can be exchanged for sodium ions under neutral conditions);
iii) nano-morphological features characteristic for the hydrated acidic polymers a) (e.g. ionomer peak in small angle scattering patterns) are qualitatively preserved.

Preferably, this is achieved by using a non-acidic polymer b) or, more specifically, a basic polymer b) which has basic moieties in its scaffold or is functionalized with basic groups, where the basicity of the groups and/or the concentration of basic groups are not too high. It is preferred that the polymer has a pKa value in the range from 2 to 9, more preferred from 4 to 7.5. If strong basic groups are present in the polymer b), their concentration should be adjusted so that the overall basicity of the polymer is maintained in the above range.

Preferably, said polymer b) has a concentration of basic groups not higher than 1.5 meq./g.

More specifically, the repeating units of the formula -[-SO₂-Ar(SO₃M)ₒ-]ₙ in polymer a) comprise or consist of recurring elements of the formula -SO₂-Ar₁(SO₃M)ₚ-, wherein Ar₁ represents an aromatic or heteroaromatic ring system with 5-18 ring atoms, M represents a cation, p means an integer from 1 to 4, and wherein Ar₁, M and p can be identical or different in various recurring elements, independently of each other, and recurring elements of the formula -SO₂-Ar₂- with Ar₂ representing an aromatic or heteroaromatic ring system with 5-18 ring atoms without SO₃M substituents which can be identical or different in various recurring elements.

Specific examples, without limitation, for the aromatic or heteroaromatic ring systems with 5-18 ring atoms represented by Ar, Ar₁, Ar₂ are phenylene, naphthylene, anthracene, phenanthrene, biphenylene, furan, thiophene, pyrrole, thiazole, triazole, pyridine, imidazole and benzimidazole. Phenylene is especially preferrred. The aromatic or heteroaromatic ring system Ar or Ar₁ can be substituted with one to four sulfonic acid groups -SO₃M, i.e., in the above formulas, o or p = 1-4, and for Ar = phenylene, p is preferably 1 or 2, more preferred 1. The counterion M of the sulfonate group is either a proton, i.e., sulfonic acid is present, or a conventional monovalent cation. Typical examples of such a cation are metal ions such as Li⁺, Na⁺, K⁺, NR₄⁺, PR₄⁺, wherein R represents an organic residue, preferably alkyl.

Apart from the sulfonic acid group, if present, and the bridge substituents -SO₂-, the aromatic or heteroaromatic rings Ar can also contain additional substituents. Some specific examples, without limitation, for such substituents are halogen, e.g., F, Cl, Br, or unsubstituted or substituted alkyl groups, e.g., -CH₃, -CF₃ or CₘH₂ₘ₊₁, where m is an integer from 2 to 20, or mixtures thereof.

The bridge substituents -SO₂- can be present at an aromatic or heteroaromatic ring Ar in the para, meta and/or ortho position, the para position being generally preferred.

In a specific embodiment of the polymer blend of the invention, the sulfonated poly(arylene sulfone) of component a) comprises or consists of alternating copolymers with sulfonated and non-sulfonated segments. Preferably, in this case the acidic groups are positioned in aromatic moieties containing an electron withdrawing group (EWG, e.g., -SO₂-, -SO-, -CO-).

More specifically, the alternating copolymers comprise or consist of one or more of the following repeating units: 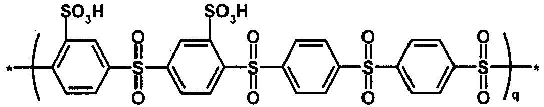 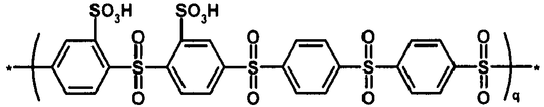 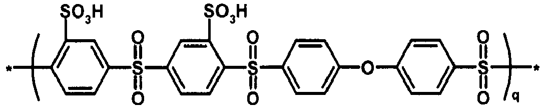 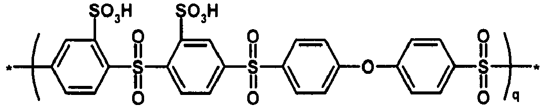 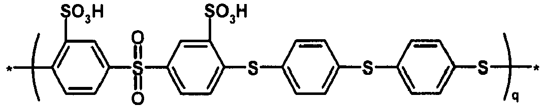 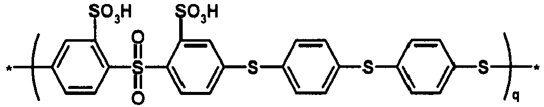 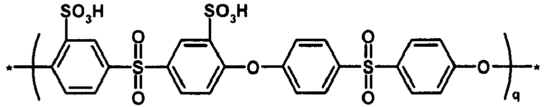 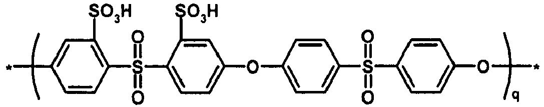 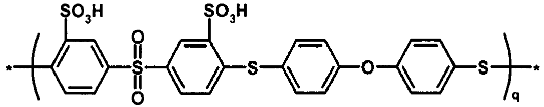 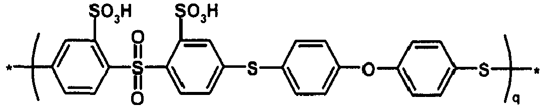 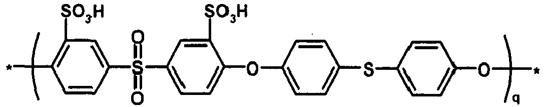 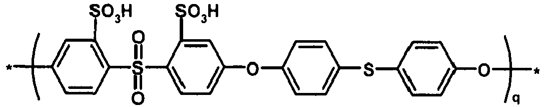 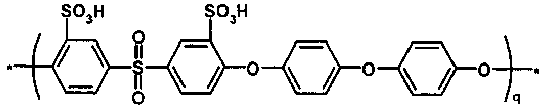 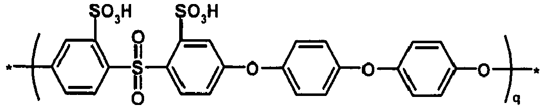 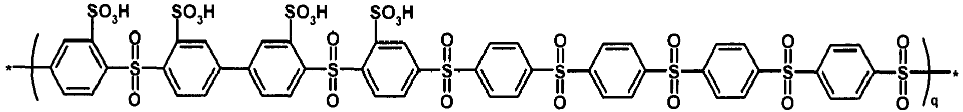 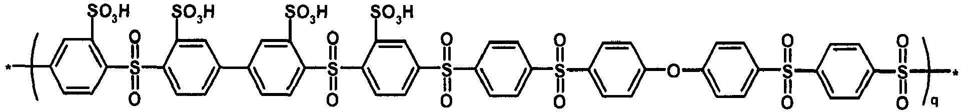 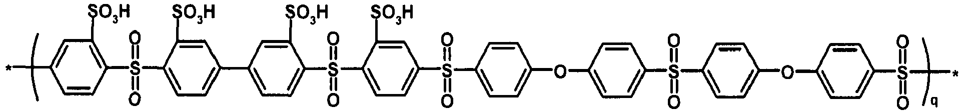 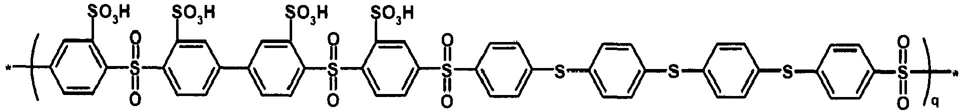 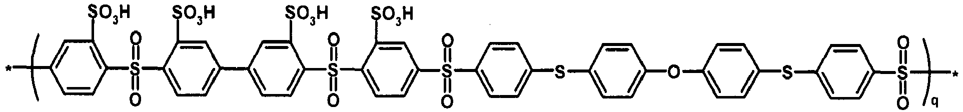 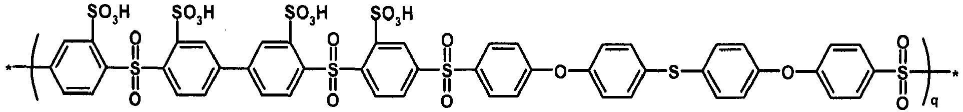 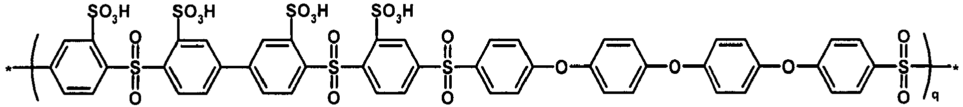 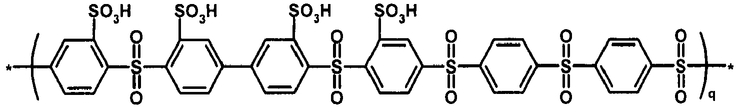 wherein q is an integer from 10 to 10.000.

In one preferred embodiment of the invention, the acidic polymer a) comprises or consists of repeating units of the structural formula below

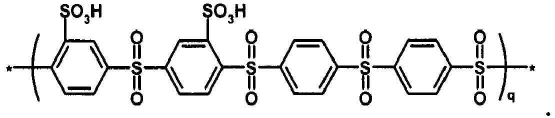

The polymer S360 used in Example 1 consists of repeating units of this formula.

Typically, the sulfonated poly(arylene sulfone) a) has an average molecular weight in the range of from 5.000 g/mol to 5.000.000 g/mol, preferably from 20.000 to 1.000.000 g/mol, and/or an IEC in the range of from 0.5 to 10 meq./g, preferably of from 1.8 to 3.7 meq./g.

The scaffold structure of said polymer b), which preferably is a non-acidic polymer, more preferred a basic polymer, is not especially limited. Polymer b) may be an aromatic or non-aromatic polymer, in particular selected from the group comprising polyethers, polyesters, polyimides and polyamides, polybenzimidazoles, polysulfones, polyether sulfones, polyketones, polyether ketones, polyphenylene oxides, polyphenylene sulfides, polycarbonates, polyurethans, polyureas, vinyl-based polymers (e.g., polyolefins, polystyrenes), acryl-based polymers (e.g., polymethyl methacrylates).

Principally, the basic polymer b) may be substituted with any basic substituents in any degree which provides the desired pKa value of the polymer.

More specifically, the basic substituent groups of polymer b) comprise a heterocyclic ring system containing at least one nitrogen atom which is selected from the group comprising pyrrolidine, piperidine, azepane, pyrrole, pyridine, azepine, imidazolidine, pyrazolidine, pyrazole, imidazole, benzimidazole, thiazolidine and thiazole.

In a specific embodiment, the basic polymer b) is any polymer, and preferably, from the thermal point of view, polyaromatics obtainable via step-growth polymerization (e.g., condensation), coupling reaction (e.g., Ullmann coupling), including poly(sulfone) or poly(ketone), and the basic substituent groups comprise a pyridine ring. Optionally, polyaliphatics are partly or fully incorporated to the basic polymer, prepared via, controlled and non-controlled radical polymerization (e.g., atomic transfer radical polymerization, nitroxide mediated polymerization, living radical polymerization).

In a preferred embodiment of the invention, the basic substituent groups of the polymer b) comprise an electron-withdrawing group, such as a ketone, sulfoxide or sulfone group, positioned between the heterocyclic ring system and the polymer scaffold.

More specifically, the basic polymer b) comprises the following structural element Y: 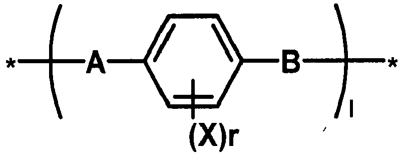 wherein A and B, independently of each other, are selected from -, -O-, -S-, -SO-,-SO₂-, -CO-, alkyl, and may be in para-, meta-or ortho-position to each other, X is selected from 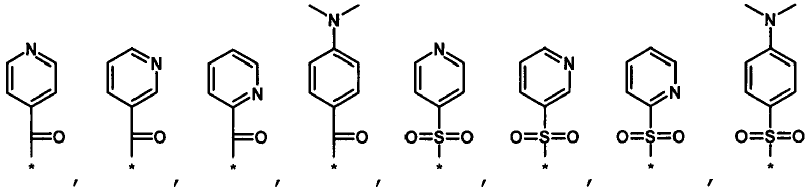 if X comprises a -SO₂- group, r = 1-4 and 1 ≥ 1, preferably 1-6, more preferred 1-4,
if X comprises a -CO- group, r = 1-4 and 1 > 1, preferably 2-6, more preferred 2-4.

In specific embodiments, the basic polymer b) consists of or comprises one or more of the following structures: 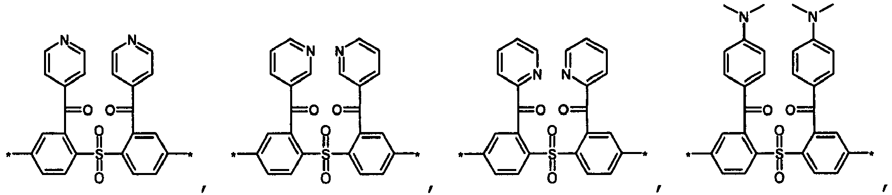 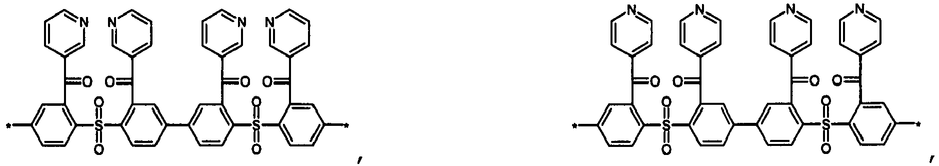 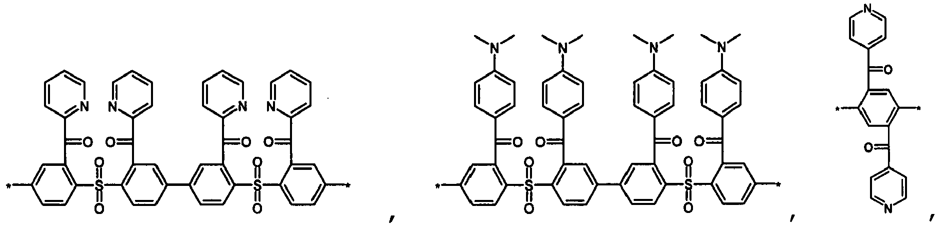 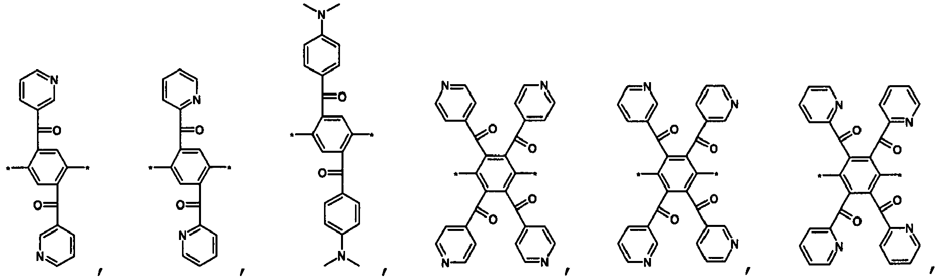 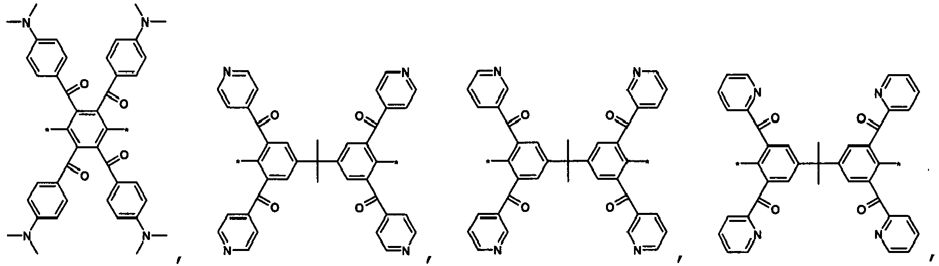 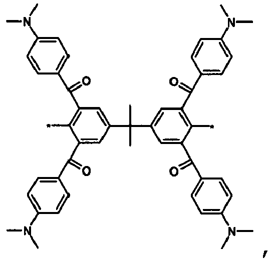 wherein the element Y as defined above is incorporated to the resulting basic polymer with a proportion in the range from 1 to 99%, preferably from 1 to 50%, more preferably from 1 to 30%, related to the total number of repeating units in the polymer.

Apart from choosing the concentration of Y, the selection of a group X, which groups show distinct variations in basicity, allows to control the interaction between polymer a) and polymer b).

In a further specific embodiment, if a case is taken from the first example Y, as written in the previous paragraph, the basic polymer b), without limitation, consists of or comprises one or more of the following structures:

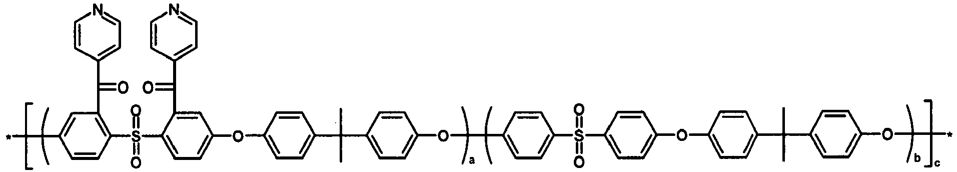

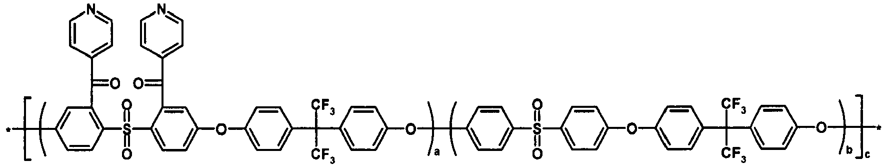

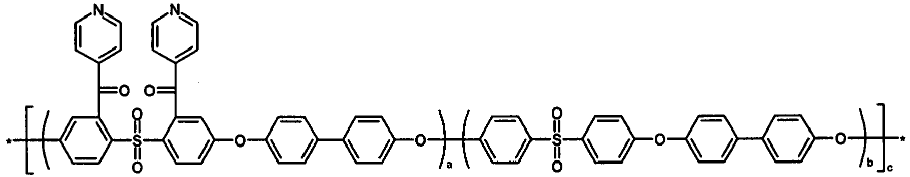

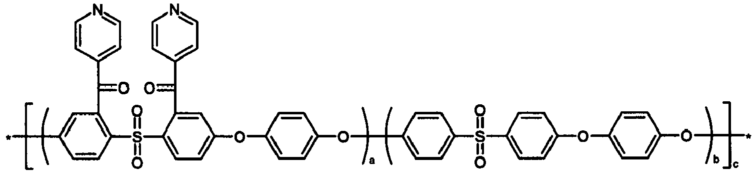

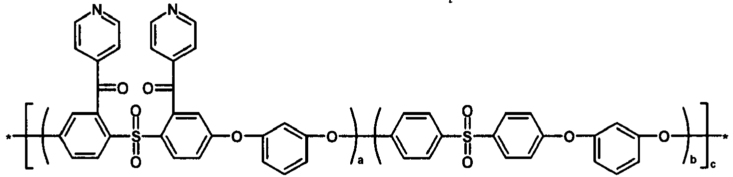

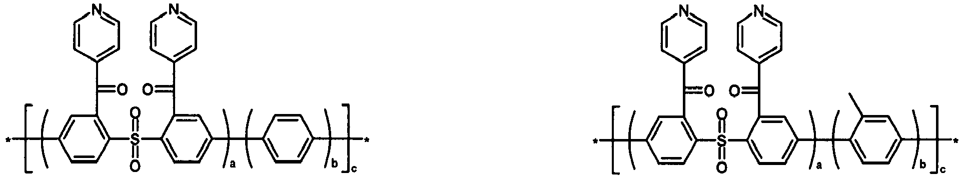

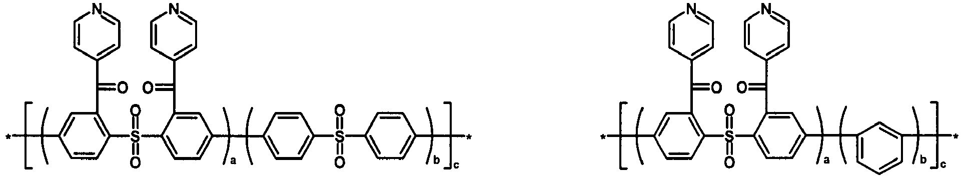

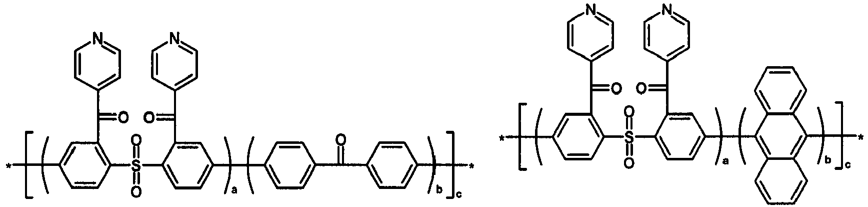

The basic polymer can also comprise any of cross-linkable (curable) structural element, e.g., containing end-group of epoxy-derivatives or a species partly incorporated by clickable derivatives (e.g., azide-, and alkyne-functions). For instance, if alkyne is taken either in the main-chain or at the endgroup, the example structures follow:

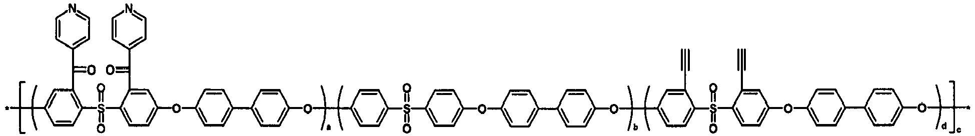

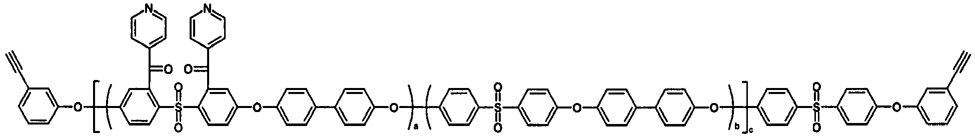

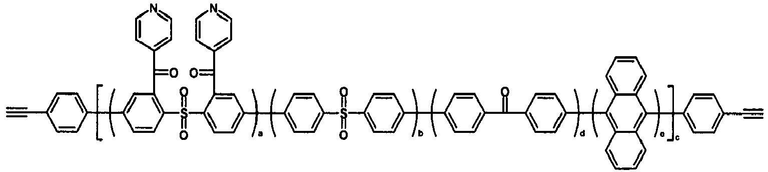

The basic polymers, as shown above, can also be prepared based on thioether, sulfoxide or sulfone linkages, instead of ether linkages or phenyl linkages. The basic polymer may have any architecture including linear, branched, dendrimeric, oligomeric, star-shaped and cyclic with any distribution of basic groups.

Typically, the basic polymer has an average molecular weight in the range of from 5.000 to 5.000,000, preferably from 20.000 to 1.000,000 and/or an IEC in the range of from 0.1 meq/g to 10 meq./g, preferably of from 0.1 to 3.7 meq/g.

The basic polymers with the structural element Y, in particular with the novel structures shown above, are not only especially advantageous for the polymer blends as described above but are also principally usable without limitation, i.e., with and without sulfonated poly(arylene sulfone) according to claim 1. Thus, these novel basic polymers as such represent a further related aspect of the present invention.

In the polymer blend of the invention, the ratio by weight of component a) to component b) is in the range from 10 : 90 to 98 : 2, preferably from 50 : 50 to 90 : 10.

A further aspect of the invention relates to a method for preparing the above polymer blends having a high proton conductivity of at least 10⁻³ S/cm at room temperature (24°C) in water and an ionic exchange capacity (IEC) of more than 1.8 meq./g, comprising the following steps:
combining a component a), i.e., a sulfonated poly(arylene sulfone) as defined above, and
a component b), i.e., an aromatic or non-aromatic polymer which exhibits basic groups or is functionalized with basic substituent groups as defined above, preferably having a pKa value in the range from 2 to 9, more preferably from 4 to 7.5, by dissolving a) and b) in suitable aprotic solvents without any neutralization of a component,
mixing both solutions, and removing the solvent, e.g., by evaporation.

A closely related aspect of the present invention is represented by a homogenous solution of an acidic polymer which is a sulfonated poly(arylene sulfone) as defined above and a basic polymer as defined above which is obtainable by conducting steps a) and b) of the method according to claim 17 and which is stable for a time period of at least 1 hour in the sense that no significant precipitation takes place. The solution may still turn milky indicating some local phase separation within a stable dispersion or suspension.

The polymer blends of the invention can be advantageously used for preparing stable but flexible membranes with high proton conductivity and high ion exchange capacity. Thus, a further aspect of the present invention relates to a polymer membrane consisting of or comprising a polymer blend as defined above.

Such membranes can be conveniently cast from a solution comprising common aprotic solvents. Typically, the solvent is selected from the group comprising EC, PC, BC, γBL, γVL, NMO, DMC, DEC, EMC, EA, MB, EB, DMM, DME, DEE, THF, 2-Me-THF, 1,3-DL, 4-Me-1,3-DL, 2-Me-1,3-DL, DMF, DMAc, DMSO, NMP, NEP, sulfolane and mixtures thereof. Optionally, the aprotic solvent(s) may also may not be combined with protic solvents, such as water or alcohol (e.g., methanol, 2-propanol).

In a more specific embodiment, the method for preparing polymer membranes comprises the following steps:
combining a component a), i.e., a sulfonated poly(arylene sulfone) as defined above, and
a component b), i.e., an aromatic or non-aromatic polymer which has basic groups or is functionalized with basic substituent groups as defined above, in a suitable aprotic solvent directly without any prior neutralization of a component,
mixing until a homogenous solution is obtained, and
directly casting the polymer membrane from the homogeneous solution.

These methods for preparing said membranes represent a still further aspect of the invention.

Membranes and polymer blends having the above mentioned favorable characteristics are particular well suited for applications in electrochemical conversion or storage devices, e.g., fuel cells, batteries, in particular redox flow batteries, capacitors. However, these materials may also advantageously be used for electrodialysis, Donnan dialysis, food dialysis, electrolysis, for ion exchange, reverse osmosis or for electromagnetic screening.

In a specific embodiment, the polymer blends of the invention can be integrated into an inert porous matrix, such as an organic (porous PE, PP, PVDF, PTFE, etc.) or inorganic matrix (porous boronitride, silica, etc.), or reinforced with fiber materials, such as glass fibers, ceramic fibers, textile fibers, carbon fibers, microporous polypropylene or polytetrafluoroethylene, etc. or fabrics thereof.

Furthermore, the polymer blends of the invention can be combined with active or inactive fillers, including, but not limited to, TiO₂, ZrO₂ or SiO₂ particles, zirconium phosphates and phosphonates, tungstic or molybdic acid, etc., to form the corresponding composite materials. A combination with other conventional additives is also easily possible.

### Brief Description of Figures

**Fig. 1** shows the storage modulus of a blend membrane comprising S360 (component a)) and 20 % modified Udel (component b)) as a function of temperature (T) for given values of the relative humidity (RH) as compared to the storage modulus of Nafion.
**Fig. 2** shows the water uptake expressed as hydration number λ = [H₂O]/[-SO₃H] of a blend membrane comprising S360 and 20 % modified Udel as a function of temperature (T) as compared to the water uptake of pure S360 and Nafion.
**Fig. 3A** shows small angle x-ray scattering patterns of a highly sulfonated poly(phenylene sulfone) (S220) and a blend with strong ionic interaction (S220 with 15% poly(benzimidazole) (PBI).
**Fig. 3B** shows small angle x-ray scattering patterns of a sulfonated poly (phenylene sulfone) (S360) and a blends of S360 with 20% udel (15% pyridine functionalized) and 30% udel (73% pyridine functionalized)).
**Fig. 4** shows the proton conductivity of a blend membrane comprising S360 (component a)) and 20 % modified udel (component b)) as compared to the conductivities of Nafion, pure polyelectrolytes (S220; S360) and a blend with strong ionic interaction (component a): S220, component b):PBI).

The following examples are to illustrate the present invention in more detail, without limiting the same to these examples.

### EXAMPLE 1

### Preparation of a polymer blend according to the invention

### 1. Preparation of a sulfonated poly (phenylene sulfone) 1

Alternating disulfonated copolymer, S360, was prepared via K₂CO₃-mediated polycondensation as follows. Disodium 3,3'-disulfonate 4,4'-difluorodiphenylsulfone (30.170 g), 4,4'-thiobenzenethiol (16.482 g) and K₂CO₃ (19.1 g) were added to NMP (200 mL) and toluene (80 mL) in a flask equipped with Dean-Stark trap and condenser. The reaction was carried out at 150 °C for 4 hours, followed by at 175 °C for 36 hours after removal of the toluene. After purification (e.g., precipitation in 2-propanol, dialysis in deionized water, vacuum dry), the yield 42.89 g was obtained. 20 g of the product was oxidized by suspending in acetic acid (400 mL), H₂SO₄ (30 mL), 31% H₂O₂ aq. (26 mL) at 30 °C for 2 days, followed by at 100 °C for 10 minutes. After purification (e.g., wash in acetic acid, dialysis in deionized water, vacuum dry), the yield 19.5 g was obtained with *M*ₙ 35.6 kDa, *M*_{w} 75.4 kDa, PDI 2.12, measured by GPC in DMF. Further detailed procedures are found in the literature (M. Schuster, K. D. Kreuer, H. T. Andersen, J. Maier, Macromolecules 2007, 40, 598).

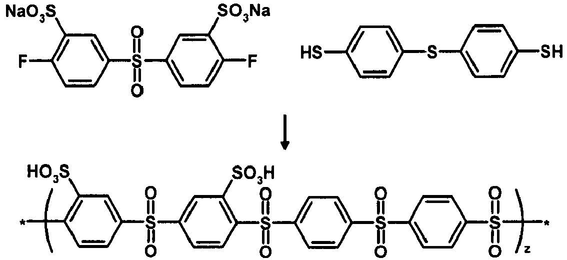

### 2. Preparation of pyridinyl functionalized Udel 2

Pyridinyl groups contained polymers, Py-PSUs, were prepared via lithiation chemistry, as follows. UDEL^{®} (2.0 g, Solvay) was dissolved in THF (120 mL) at room temperature, followed by cooling down to -70 °C. 1.6 M n-BuLi (1.7 mL) was added to the solution after degassing using argon and vacuum. After 1 hour, ethyl isonicotinate (EIN, 2.0 mL) was added. After purification (e.g., precipitation and wash in deionized water and 2-propanol, vacuum dry), the yield 1.9 g was obtained with degree of substitution, 10 mol%, calculated by ¹H NMR spectrum in CDCl₃, as well as *M*ₙ 28.7 kDa, *M*_{w} 77.1 kDa, PDI 2.69, measured by GPC in DMF. Further detailed procedures are found in the literature (J. Kerres, A. Ullrich, M. Hei, J. Polym. Sci. Polym. Chem. 2001, 39, 2874).

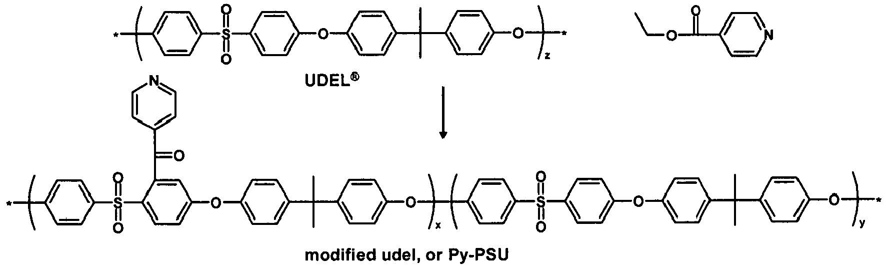

### 3. Preparation of a polymer blend consisting of 1 and 2

Blend membranes with S360 and Py-PSU were prepared as follow. DMAc solutions of S360 and Py-PSU were separately prepared. Py-PSU solution was then added at room temperature to S360 solution with a total solid concentration of 7 wt%, followed by glass-filtration (porosity No.4) resulting in a clear solution. This was cast onto a glass substrate, and the corresponding membrane was formed in a vacuum oven at 60 °C overnight. After detaching from the substrate by immersion in deionized water, the membrane was boiled in 0.5 M aq. H₂SO₄ for 2 hours, followed by in deionized water for 2 hours. The membrane was kept in a wet state by deionized water, prior to use.

### EXAMPLE 2

### Alternative preparation of a polymer blend according to the invention

A polymer blend was prepared analogously to Example 1. However, in this case, the Py-PSU was prepared not by post-modification of existing polymers as in Example 1, but by de novo-synthesis from specific monomers. This approach allows for the precise control of the molecular design of base polymers useful for the present invention.

### Preparation of pyridyl functionalized monomer

4,4'-difluoro diphenylsulfone (DFDPS, 20.0 g) was dissolved in THF (400 mL) under Ar at room temperature. After the addition of 1.6 M n-BuLi (108 mL) at -70 °C, EIN (39 mL) was added to the reactor. The product was precipitated and washed in deionized water and 2-propanol several times. Several times of recrystallization by 2-propanol were performed for purification, and the yield 17 g was obtained.

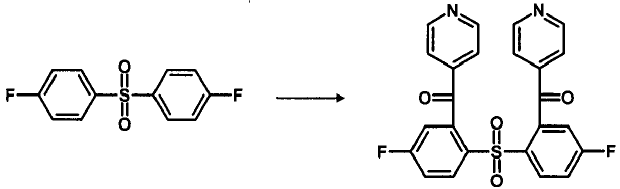

The dipyridyl group functionalized monomer prepared, Py-DFDPS, was identified by its ¹H NMR spectrum.

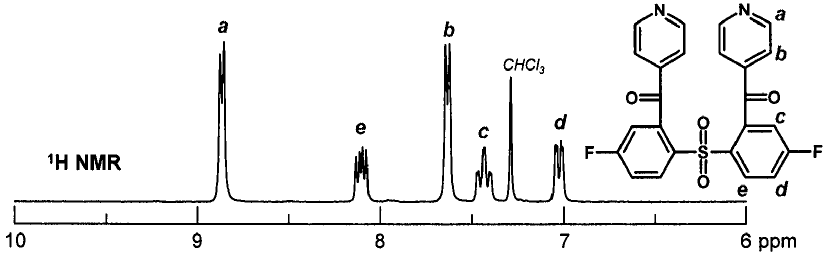

Field desorption mass spectrum reported on 463.2 g mol⁻¹ as the main peaks, which almost match the ideal compound (exact mass: 464.06 g mol⁻¹) minus one hydrogen atom. Elemental analyses also supported their structures: (Calc.) C 62.07%, H 3.04%, N 6.03%, S 6.90%; (Found) C 58.30%, H 2.83%, N 5.86%, S 6.93%.

### Preparation of pyridyl functionalized PSU (polymerization)

Py-PSU was prepared using Py-DFDPS via K₂CO₃-mediated polycondensation. An example follows as below, to achieve the equivalent degree of substitution (i.e., 5 mol% as dipyridyl group, instead of 10 mol% monopyridyl group) in the resulting copolymer to the one described by Example 2. DFDPS (1.5995 g), Py-DFDPS (0.1538 g), bisphenol A (1.5117 g) and K₂CO₃ (1.0982 g) were placed in a flask containing DMAc (14 mL) and cyclohexane (7 mL). The reactor was first heated at 110 °C for 2 hours. After removal of the cyclohexane, the reaction temperature was set to 130 °C for 24 hours. After purification (e.g., precipitation and wash in deionized water and 2-propanol, vacuum dry), the yield 2.61 g was obtained with *M*ₙ 65.6 kDa, *M*_{w} 146.5 kDa, PDI 2.23 measured by GPC in DMF.

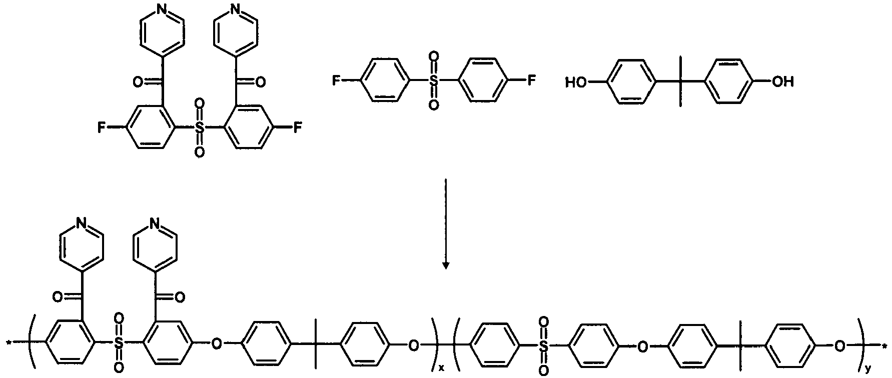

### EXAMPLE 3

### Characterization of polymer blend membranes and experimental data for membranes prepared as described in EXAMPLE 1

### Dynamical Mechanical Analysis DMA

DMA was performed on a DMA Q800 (TA Instruments) connected to a homebuilt humidifier as a function of temperature and relative humidity RH. The sample holder was hermetically encapsulated, and RH was controlled by keeping the temperature of the humidifier and the sample constant within a precision of ± 0.05 °C. Nitrogen was used as a transport gas at a flow rate of 50 ml/min, and the capillary connecting humidifier and sample holder was kept at a temperature 20°C above the sample temperature. For each set of conditions temperature and RH were kept constant for a minimum of five hours while continuously recording data. The measurements were performed by applying an oscillatory sinusoidal tensile deformation with a frequency of ν = 1 Hz, an amplitude of A = 20 µm and a preload force of F = 0.01 N on a rectangular film sample of 20 x 5 x 0.05 - 0.2 mm.

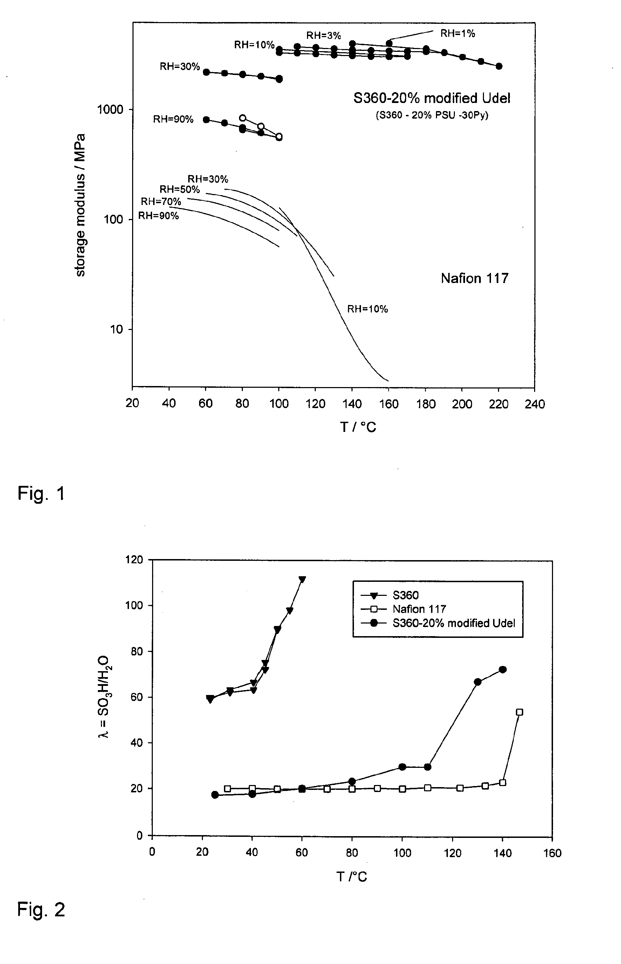

Fig. 1 shows the storage modulus of a blend membrane (prepared as described in EXAMPLE 1, comprising S360 (component a)) and 20 % modified Udel (component b)) as a function of temperature (T) for given values of the RH as compared to the storage modulus of Nafion. Note, that the severe softening at high T observed for Nafion at very low (RH<10%) and high RH (RH> 90%) is not an issue for the blend membrane.

### Membrane Swelling

The swelling in water was determined by measuring the weight gain of immersed membrane pieces treated in an autoclave half filled with water for two hours. The weights of the dry samples were taken as reference. The results were significantly less reproducible than the hydration behavior at constant RH and particularly depended on the pre-treatment of the membrane pieces. Here, we only show the swelling after standardization at T = 80° C in 1M sulfuric acid and pure water.

Fig. 2 shows the water uptake expressed as hydration number λ = [H₂O]/[-SO₃H] of a blend membrane (described as EXAMPLE 1, comprising S360 (component a)) and 20% modified Udel (component b))as a function of temperature (T) as compared to the water uptake of pure S360 and Nafion. While pure S360 shows exaggerated swelling above T = 40°C, the swelling of the blend membrane is limited to λ = 25 for temperatures up to T = 110°C.

### Small Angle Scattering

Samples for SAXS experiments (4 membrane slices of ~50 µm thickness) were equilibrated at ambient relative humidity (RH~40%) and then transferred into a gas tight brass cell with two thin Mylar sheets serving as windows. SAXS experiments were performed at the DUBBLE beam line (BM26B) at the European Synchrotron Radiation Facility (ESRF) in Grenoble (France). The data were collected using a 2D multiwire gas-filled detector with pixel array dimensions of 512 x 512. The *q*-scale was calibrated using the position of diffracted peaks from a standard silver behenate powder. The exposure time for each sample was about 60 s and a wavelength of *λ* = 1.54 Å was used. The experimental data were corrected for the background scattering and transformed into 1D-plots by azimuthal angle integration.

Fig. 3A shows small angle x-ray scattering patterns of a highly sulfonated poly(phenylene sulfone) (S220) and a blend with strong ionic interaction (S220 with 15% poly(benzimidazole) (PBI). Here, the characteristic ionomer peak indicating a structural correlation on the nano-meter scale for S220 is completely lost for the blend.

Fig. 3B shows small angle x-ray scattering patterns of a sulfonated poly (phenylene sulfone) (S360) and a blends of S360 with 20% udel (15% pyridine functionalized) and 30% udel (73% pyridine functionalized)). Note that the characteristic ionomer peak indicating a structural correlation on the nano-meter scale for S360 is qualitatively retained even for the blend with 73% pyridine functionalized udel (IEC = 1.38 meq./g).

### Conductivity Measurements

Conductivity measurements in pure water vapor (p_{H2O} = 10⁵ Pa) were measured in-plane with a four electrode arrangement using a modified commercial conductivity cell (Fumatech).

Fig. 4 shows the proton conductivity of a blend membrane (prepared as described in EXAMPLE 1, comprising S360 (component a)) and 20 % modified Udel (component b)) as compared to the conductivities of Nafion, pure polyelectrolytes (S220; S360) and a blend with strong ionic interaction (component a): S220, component b):PBI). The conductivities are recorded at a constant water pressure of 1 atm, i.e. decreasing relative humidity *RH* with increasing temperature T.

## Claims

1. A polymer blend having an ion conductivity of at least 10⁻³ S/cm at room temperature (24°C) in water and comprising
a) a polymer which is a sulfonated poly(arylene sulfone) comprising or consisting of one or more repeating units of the formula -[-SO₂-Ar(SO₃M)ₒ-]n, wherein n is an integer from 10 to 10.000, Ar represents an aromatic or heteroaromatic ring system with 5-18 ring atoms, M represents a cation, in particular a proton, o means an integer from 0 to 4, and wherein Ar, M and o can be identical or different in various repeating units, independently of each other, and
b) a polymer which is not a sulfonated poly(arylene sulfone) as defined for polymer a) above and which is chemically compatible with polymer a) in that polymer a) and polymer b) may be present in the same solvent or solvent mixture without any significant precipitation for a time period of at least 1 hour.

2. The polymer blend according to claim 1, which further exhibits at least 1, preferable 2 or 3, of the following properties:
i) at least 1.8 meq./g SO₃M groups remain exchangeable under neutral conditions, e.g., in a 1M NaCl aqueous solution at pH 7, after blending component a) and component b);
ii) the majority, preferably at least 90 %, more preferably at least 95 % or 99%, or all of the SO₃M groups remain exchangeable under neutral conditions after blending component a) and component b);
iii) the characteristic ionomer peak of polymer a) as observed in small angle diffraction measurements is still discernible in the small angle diffraction pattern of the polymer blend.

3. The polymer blend according to claim 1 or 2, wherein the polymer b) comprises Bronsted basic groups.

4. The polymer blend according to claim 3, wherein the polymer b) has a pKa value in the range from 2 to 9, preferably from 4 to 7.5.

5. The polymer blend according to any one of claims 1-4, wherein the repeating units of the formula -[-SO₂-Ar(SO₃M)ₒ-]ₙ comprise or consist of recurring elements of the formula -SO₂-Ar₁(SO₃M)ₚ-, wherein Ar₁ represents an aromatic or heteroaromatic ring system with 5-18 ring atoms, preferably phenylene, M represents a cation, p means an integer from 1 to 4, and wherein Ar₁, M and p can be identical or different in various recurring elements, independently of each other, and recurring elements of the formula -SO₂-Ar₂- with Ar₂ representing an aromatic or heteroaromatic ring system with 5-18 ring atoms, preferably phenylene, without SO₃M substituents which can be identical or different in various recurring elements.

6. The polymer blend according to claim 5, wherein said sulfonated poly(arylene sulfone) are alternating copolymers between sulfonated and non-sulfonated segments.

7. The polymer blend according to claim 6, wherein the alternating copolymers comprise or consist of one or more of the following repeating units: 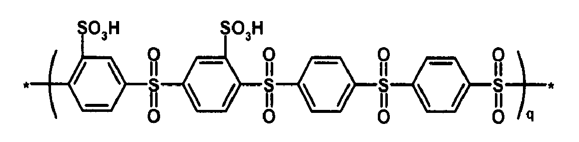 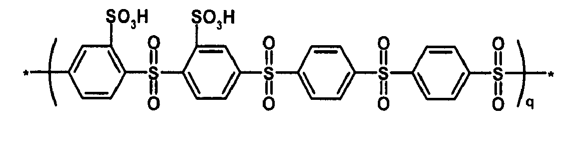 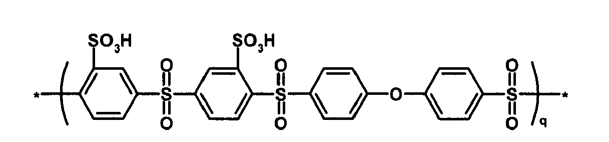 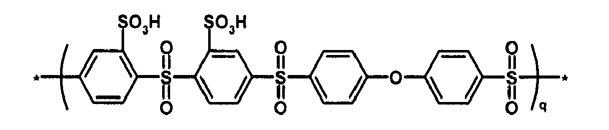 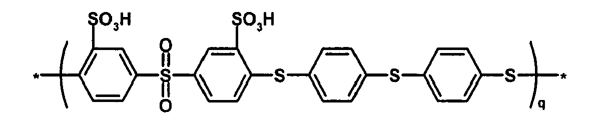 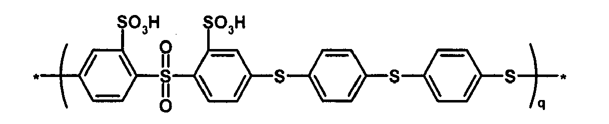 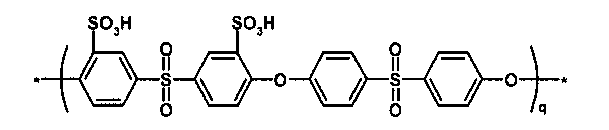 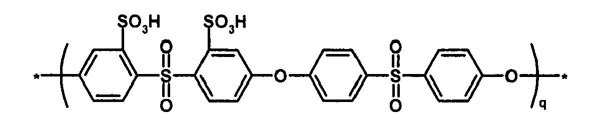 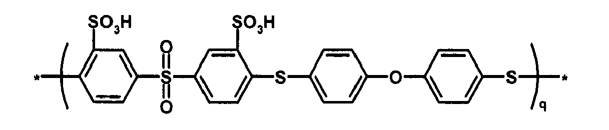 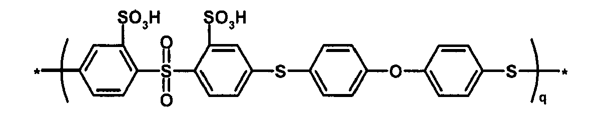 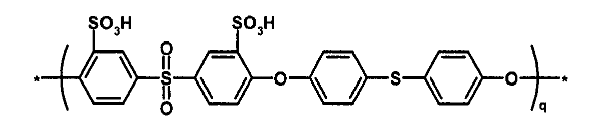 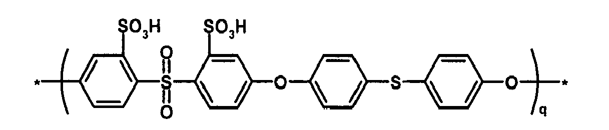 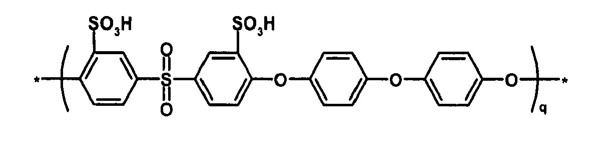 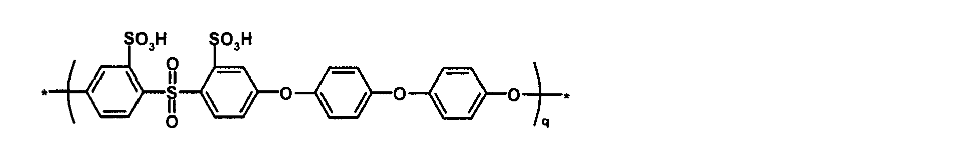 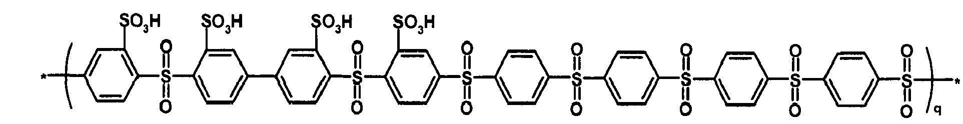 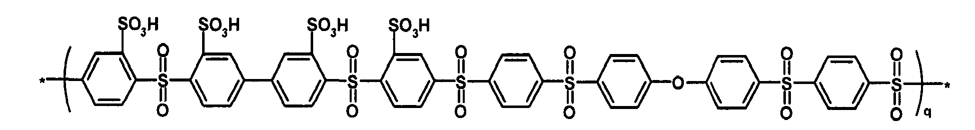 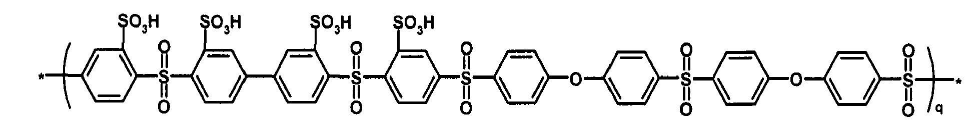 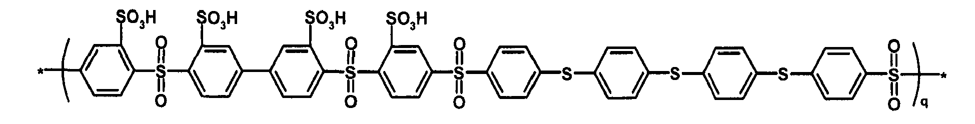 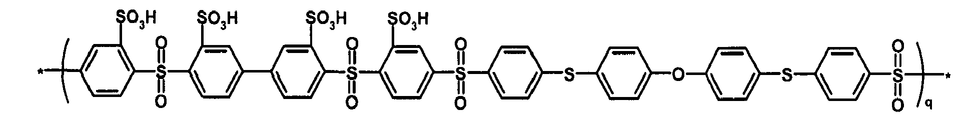 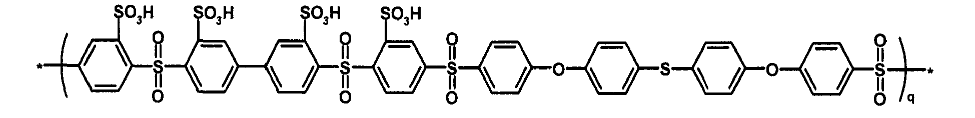 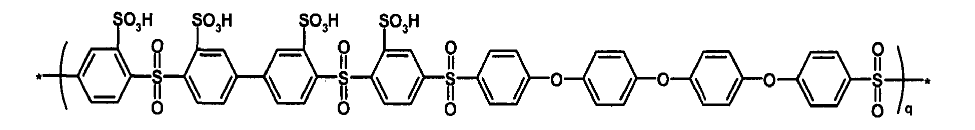 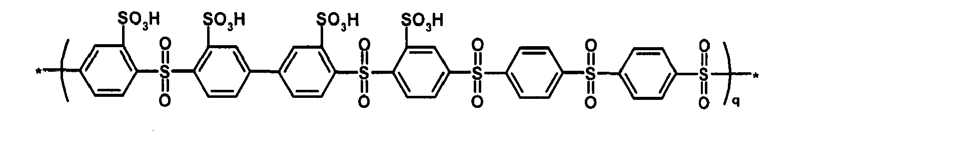 wherein q is an integer from 10 to 10.000.

8. The polymer blend according to any one of claims 3 to 7, wherein the basic groups of the polymer b) comprise a heterocyclic ring system containing at least one nitrogen atom which is selected from the group comprising pyrrolidine, piperidine, azepane, pyrrole, pyridine, azepine, imidazolidine, pyrazolidine, pyrazole, imidazole, benzimidazole, thiazolidine, and thiazole.

9. The polymer blend according to one of claims 3 to 8, wherein the basic groups of the polymer b) comprise an electron withdrawing group (EWG) positioned between the heterocyclic ring system and the polymer scaffold.

10. The polymer blend according to one of claims 3 to 9, wherein the polymer b) which is functionalized with basic substituent groups is an aromatic or non-aromatic polymer, in particular selected from the group comprising polyethers, polyesters, polyimides and polyamides, polybenzimidazoles, polysulfones, polyether sulfones, polyketones, polyether ketones, polyphenylene oxides, polyphenylene sulfides, polycarbonates, polyurethans, polyureas, vinyl-based polymers such as polyolefins and polystyrenes, acryl-based polymers, in particular polymethyl methacrylates.

11. The polymer blend according to one of claims 3 to 10, wherein the basic polymer b) is any polymer, preferably aromatic polymer (e.g., poly(sulfone) and poly(ketone)), and the basic substituent groups comprise a pyridine ring.

12. The polymer blend according to one of claims 3 to 11, wherein the basic polymer b) comprises the following structural element Y: 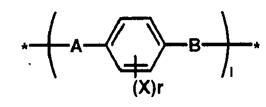 wherein A and B, independently of each other, are selected from -, -O-, -S-, -SO-,-SO₂-, -CO-, alkyl, and may be in para-, meta- or ortho-position to each other, X is selected from 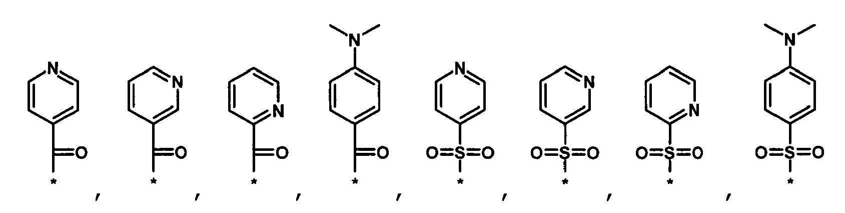 if X comprises a -SO₂- group, r = 1-4 and l ≥ 1,
if X comprises a -CO- group, r = 1-4 and l > 1.

13. The polymer blend according to claim 12, wherein the basic polymer b) consists of or comprises one or more of the following repeating units: 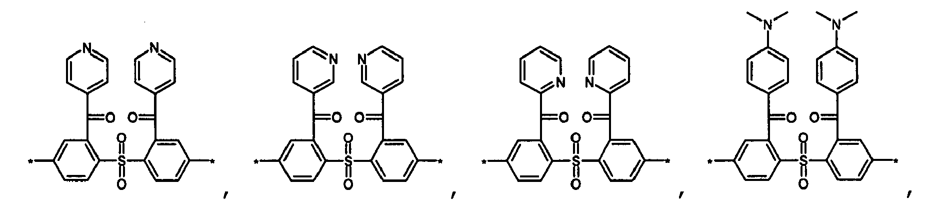 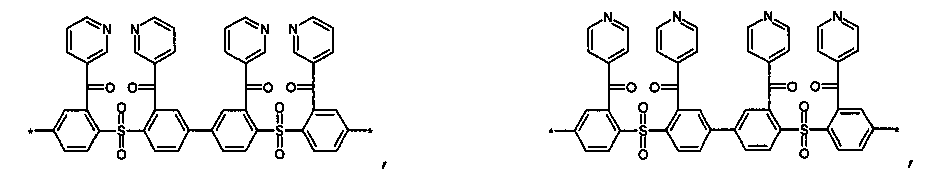 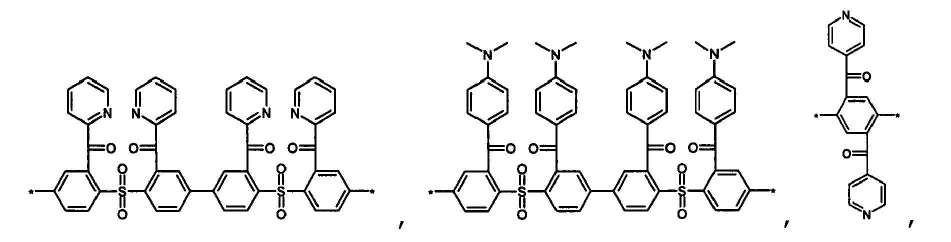 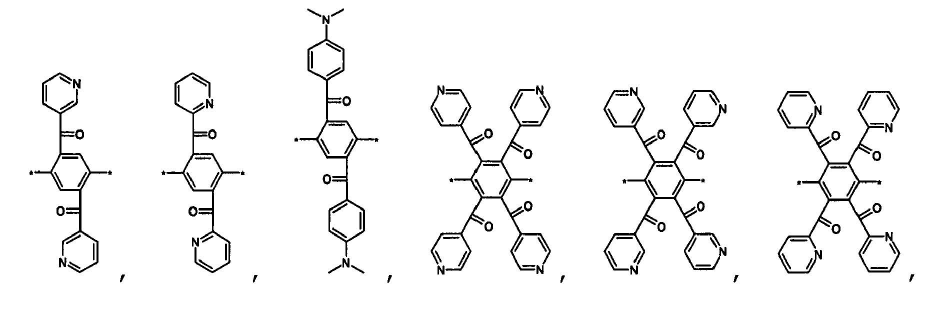 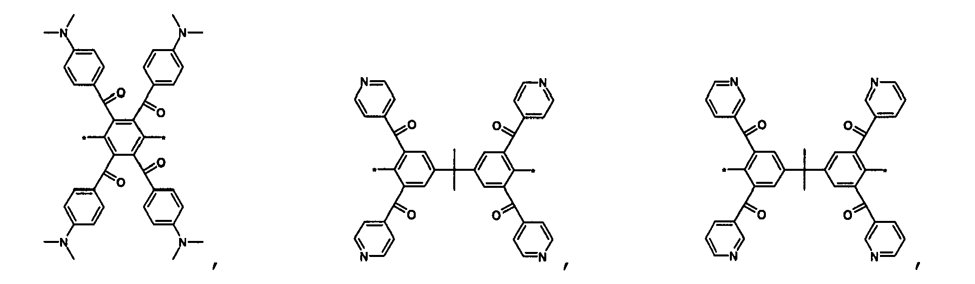 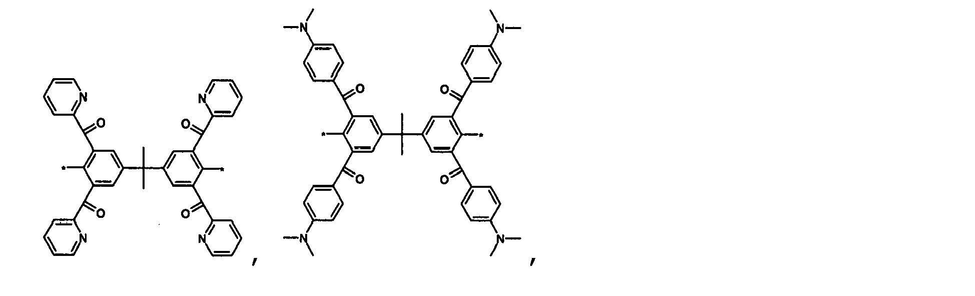 wherein the element Y as defined in claim 12 is incorporated into the resulting basic polymer with a proportion in the range from 1 to 99%, related to the total number of repeating units.

14. A basic polymer consisting of or comprising one or more of the repeating units shown in claim 13, in particular wherein the element Y as defined in claim 12 is incorporated into the resulting basic polymer with a proportion in the range from 1 to 99%, related to the total number of repeating units.

15. A polymer membrane consisting of or comprising the polymer blend of one of claims 1-13.

16. Use of the polymer blend of one of claims 1-13 or of the polymer membrane of claim 15 in an electrochemical conversion or storage device, e.g., a fuel cell,battery or capacitor, in dialysis, electrolysis, ion exchange, or reverse osmosis applications.

17. A method for preparing polymer blends having a high ionic conductivity of at least 10⁻³ S/cm at room temperature (24°C) in water and an ionic exchange capacity (IEC) of more than 1.8 meq./g, comprising the following steps:
a) combining a component a), i.e., a sulfonated poly(arylene sulfone) as defined above, and
a component b), i.e., an aromatic or non-aromatic polymer which is functionalized with basic substituent groups as defined above, preferably having a pKa value in the range from 2 to 9, more preferably from 4 to 7.5, in a suitable aprotic solvent or solvent mixture directly without any prior neutralization of a component,
b) mixing until a solution is obtained, and
c) removing the solvent, e.g. by evaporation.

18. The method according to claim 17, wherein the aprotic solvent(s) is/are selected from the group comprising EC, PC, BC, γBL, γVL, NMO, DMC, DEC, EMC, EA, MB, EB, DMM, DME, DEE, THF, 2-Me-THF, 1,3-DL, 4-Me-1,3-DL, 2-Me-1,3-DL, DMF, DMAc, DMSO, NMP, NEP, sulfolane and mixtures thereof.

19. A homogenous solution of an acidic polymer which is a sulfonated poly(arylene sulfone) as defined in claim 1 and a basic polymer as defined in claim 3 which is obtainable by conducting steps a) and b) of the method according to claim 16 and which is stable for a time period of at least 1 hour.

20. A method for preparing the polymer membrane according to claim 15, comprising the following steps:
combining a component a), i.e., a sulfonated poly(arylene sulfone) as defined in claim 1, and
a component b), i.e., an aromatic or non-aromatic polymer which is functionalized with basic substituent groups as defined in claim 5, in a suitable aprotic solvent directly without any prior neutralization of a component,
mixing until a homogenous solution is obtained, and
directly casting the polymer membrane from the homogeneous solution.
